(19) Europäisches Patentamt
European Patent Office
Office européen des brevets

(11) Veröffentlichungsnummer: 0 302 424 B1

# (12) EUROPÄISCHE PATENTSCHRIFT

(45) Veröffentlichungstag der Patentschrift: 24.07.91 Patentblatt 91/30

(51) Int. Cl.$^5$: C08F 10/00, C08F 4/602

(21) Anmeldenummer: 88112409.3

(22) Anmeldetag: 30.07.88

## (54) Verfahren zur Herstellung von 1-Olefinpolymeren.

Die Akte enthält technische Angaben, die nach dem Eingang der Anmeldung eingereicht wurden und die nicht in dieser Patentschrift enthalten sind.

(30) Priorität: 06.08.87 DE 3726067

(43) Veröffentlichungstag der Anmeldung: 08.02.89 Patentblatt 89/06

(45) Bekanntmachung des Hinweises auf die Patenterteilung: 24.07.91 Patentblatt 91/30

(84) Benannte Vertragsstaaten: AT BE DE ES FR GB IT NL SE

(56) Entgegenhaltungen:
EP-A- 0 127 530
EP-A- 0 206 794
EP-A- 0 226 463
FR-A- 2 539 133

(73) Patentinhaber: HOECHST AKTIENGESELLSCHAFT
Postfach 80 03 20
W-6230 Frankfurt am Main 80 (DE)

(72) Erfinder: Winter, Andreas, Dr.
Gundelhardtstr. 2
W-6233 Kelkheim (DE)
Erfinder: Spaleck, Walter, Dr.
Sulzbacher Str. 63
W-6237 Liederbach (DE)

EP 0 302 424 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf ein Verfahren zur Herstellung von 1-Olefinpolymeren mit hoher Isotaktizität und vorteilhafter Korngrößenverteilung.

Für die Herstellung von Polyolefinen mit hoher Isotaktizität werden in neuerer Zeit Trägerkatalysatoren eingesetzt, bei welchen Übergangsmetallverbindungen zusammen mit geeigneten Elektronendonatoren auf Trägern, beispielsweise Magnesiumchlorid, aufgebracht sind. Als Aktivatoren werden in der Polymerisationsreaktion Aluminiumalkyle und als Stereoregulatoren Donatoren wie Benzoesäureethylester oder $Ph_2$ $Si(OR)_2$ zur Vergiftung nicht stereospezifischer Zentren verwendet.

Da diese Katalysatoren überwiegend aus $MgCl_2$ bestehen, werden in den damit hergestellten Polymeren relativ hohe Chlorgehalte von 30-300 ppm gefunden, sofern diese Rückstände nicht durch eine spezielle Nachbehandlung entfernt werden.

Bekannt sind auch lösliche Ziegler-Katalysatoren auf Basis von Bis(cyclopentadienyl)zirkon-alkyl bzw. -halogenid in Kombination mit oligomeren Aluminoxanen. Mit diesen Katalysatoren können Ethylen und Propylen mit mäßiger Aktivität polymerisiert werden, man erhält jedoch kein isotaktisches Polypropylen.

Diskussion der Druckschriften D1 und D2

D1

Es ist ferner ein Trägerkatalysator zur Olefinpolymerisation bekannt, der aus dem Reaktionsprodukt eines Metallocens, eines Aluminoxans und eines Trägermaterials gebildet wird [EP-A-02 06 794]. Der trägergestützte Katalysator dient vorzugsweise zur Herstellung von Homo- und Copolymeren des Ethylens, wobei als Metallocenkomponente unverbrückte, nicht stereorigide Übergangsmetallverbindungen eingesetzt werden.

D2

Darüberhinaus wird ein Katalysator bestehend aus dem Reaktionsprodukt eines Metallocens von einem Übergangsmetall und einem Überschuß an Aluminoxan zur Olefinpolymerisation beschrieben [EP-A-02 26 463]. Der Katalysator, ein Öl oder Feststoff, wird isoliert und bevorzugt ohne organometallischen Cokatalysator zur Homo- und Copolymerisation von Ethylen verwendet, wobei insbesondere unverbrückte, nicht stereorigide Metallocene eingesetzt werden.

Weitherhin ist von dem Katalysatorsystem Bis(cyclopentadienyl)titandiphenyl/Methylaluminoxan bekannt, daß es Propylen in Stereoblockpolymere, d.h. Polypropylen mit relativ langen isotaktischen Sequenzen, umzuwandeln vermag (vgl. US-PS 4 522 982). Wesentliche Nachteile dieses Katalysatorsystems sind die großtechnisch irrelevanten Temperaturen für die Polymerisation (0° bis –60°C) und die unbefriedigende Katalysatoraktivität.

Schließlich gelingt es mit Hilfe einer stereorigiden und chiralen Zirkonverbindung zusammen mit einem Aluminoxan, in einer Suspensionspolymerisation isotaktisches Polypropylen herzustellen (vgl. EP-A 185918 = US Ser. No 801,683). Das Polymer besitzt eine enge Molmassenverteilung, was für bestimmte Anwendungsgebiete, beispielsweise für den Hochleistungsspritzguß, von Vorteil ist. Gleichzeitig besitzt das Katalysatorsystem eine Reihe von Mängeln. Wegen der geringen Aktivität ist eine aufwendige Reinigung des Polymers erforderlich, um die großen Restmengen an Katalysator zu entfernen. Die Schüttdichte des Polymers ist zu gering, die Kornmorphologie und die Korngrößenverteilung unbefriedigend. Außerdem wird die Polymerisation in Toluol durchgeführt, welches sehr aufwendig gereinigt und von Feuchtigkeit und Sauerstoff befreit werden muß.

Es bestand die Aufgabe, einen Katalysator zu finden, welcher die Nachteile der bekannten Katalysatoren nicht besitzt.

Es wurde gefunden, daß eine Voraktivierung des Metallocens mit einem Aluminoxan eine beachtliche Steigerung der Aktivität des Katalysatorsystems und eine Verbesserung der Kornmorphologie des Polymeren bewirkt.

Die Erfindung betrifft somit ein Verfahren zur Herstellung eines 1-Olefinpolymers durch Polymerisation eines 1-Olefins der Formel $R\text{-}CH=CH_2$, worin R eine Alkylgruppe mit 1 bis 28 C-Atomen ist oder Copolymerisation dieser Olefine mit Ethylen bei einer Temperatur von – 60 bis 200°C, bei einem Druck von 0,5 bis 60 bar, in Lösung, in Suspension oder in der Gasphase, in Gegenwart eines Katalysators, welcher aus einer ein Metallocen enthaltenden Übergangsmetall Komponente und einem Aluminoxan der Formel IV oder V als zweiter Komponente besteht, dadurch gekennzeichnet, daß die Polymerization in Gegenwart eines Katalysators durchgeführt wird, dessen Übergangsmetallkomponente vor der Polymerisation durch Auflösen eines Metallocens in Form eines Feststoffs in einer Lösung eines Aluminoxans der Formel IV

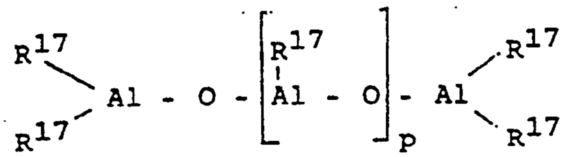

(IV)

für den linearen Typ und/oder der Formel V

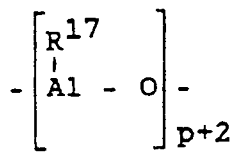

(V)

für den cyclischen Typ, wobei in den Formeln IV und V $R^{17}$ eine $C_1$-$C_6$-Alkylgruppe bedeutet und p eine ganze Zahl von 2 bis 50 ist, hergestellt und bei einer Temperatur von − 78 bis 100°C 5 Minuten bis 100 Stunden voraktiviert wurde, und diese Lösung als solche zur Polymerisation verwendet wird.

Für das erfindungsgemäße Verfahren können verschiedene Metallocen-Katalysatoren eingesetzt werden.

Zur Herstellung von hochisotaktischen Poly-1-olefinen werden stereorigide, chirale Metallocene verwendet. Diese Metallocene sind solche der Formel I

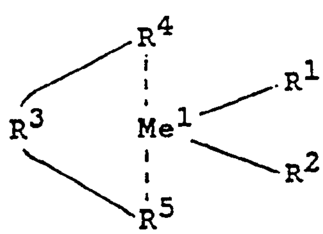

(I)

In dieser Formel ist

$Me^1$ ein Metall der Gruppe IV b oder V b des Periodensystems der Elemente, also Titan, Zirkon, Hafnium, Vanadium, Niob, Tantal, vorzugsweise Titan, Zirkon, insbesondere Zirkon. $R^1$ und $R^2$ sind gleich oder verschieden und bedeuten eine $C_1$-$C_{10}$-, vorzugsweise $C_1$-$C_3$-Alkylgruppe, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Aralkylgruppe, eine $C_8$-$C_{40}$-, vorzugsweise $C_8$-$C_{12}$-Arylalkenylgruppe oder ein Halogenatom, vorzugsweise Chlor.

$R^3$ ist ein linearer $C_1$-$C_4$- vorzugsweise $C_1$-$C_3$-Kohlenwasserstoffrest oder ein cyclischer $C_4$-$C_6$-Kohlenwasserstoffrest; diese Kohlenwasserstoffreste können mindestens ein Heteroatom als Brückeneinheit in der Kette enthalten. Die Brücke $R^3$ kann auch nur aus Heteroatomen aufgebaut sein.

Beispiele für eingliedrige Brückeneinheiten sind $—CR^6_2—$, —O—, —S—, —SO—, —Se—, —SeO—, $—NR^6—$, $—PR^6—$, $—AsR^6—$, $—BR^6—$, $—AlR^6—$, $—SiR^6_2—$, $—GeR^6_2—$, wobei $R^6$ ein Wasserstoffatom, eine $C_6$-$C_{10}$-, vorzugsweise $C_6$-$C_8$-Arylgruppe, eine $C_1$-$C_{10}$-, vorzugsweise $C_1$-$C_4$-Alkylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Aralkylgruppe, eine $C_8$-$C_{40}$-, vorzugsweise $C_8$-$C_{12}$-Arylalkenylgruppe oder ein Halogenatom, vorzugsweise Chlor ist. Bevorzugt sind $—CR^6_2—$ und Silizium und Schwefel enthaltende Brückeneinheiten.

Beispiele für zweigliedrige Brückeneinheiten sind $—(CR^6_2)_2—$, —SS—, —SeSe—, $—SiR^6_2SiR^6_2—$ und $—SiR^6_2CR^6_2—$.

Beispiele für mehrgliedrige Brückeneinheiten sind $—(CR^6_2)_3—$, $—(CR^6_2)4—$, $—SiR^6_2OSiR^6_2—$, $—SiR^6_2(CR^6_2)_nSiR^6_2—$, $—SiR^6_2(CR^6_2)_n—$, $—S(CR^6_2)_nS—$, $—S(CR^6_2)_n$, $—NR^6(CR^6_2)_nNR—$, $—NR^6(CR^6_2)_n—$, $—PR^6(CR^6_2)_nPR^6—$, $—PR^6(CR^6_2)_n—$ mit n = 1 oder 2, $—AlR^6OAlR^6—$, wobei $R^6$ die vorstehend genannte Bedeutung hat. Bevorzugt sind $—(CR^6_2)_2—$, $—(CR^6_2)_3—$ und Silizium und Schwefel enthaltende Brückeneinheiten.

$R^4$ und $R^5$ gleich oder verschieden, vorzugsweise gleich. Sie sind ein- oder mehrkernige Kohlenwasserstoffreste, welche zusammen mit dem Zentralatom eine Sandwichstruktur bilden können. Beispiele für derartige Reste sind die Indenyl-, Tetrahydroindenyl oder Cyclopentadienylgruppe und Heteroaromatenliganden. Besonders bevorzugte Metallocene sind Bisindenylzirkondichloride.

Die optisch aktiven Metallocene werden als Racemat eingesetzt. Verwendet werden kann aber auch die

reine D-oder L-Form. Mit diesen reinen stereoisomeren Formen ist optisch aktives Polymeres herstellbar. Abgetrennt werden muß jedoch die meso-Form der Metallocene, da das polymerisationsaktive Zentrum (das Metallatom) in diesen Verbindungen wegen Spiegelsymmetrie am Zentralmetall nicht mehr chiral ist.

Die Trennung der Stereoisomeren ist im Prinzip bekannt (H.H. Brintzinger et al. Journal of Organometallic Chemistry, 232 (1982) 233 und 328 (1987)87).

Die vorstehend beschriebenen stereorigiden, chiralen Metallocene können nach folgendem Reaktionsschema hergestellt werden :

$$\left.\begin{array}{l} R^4 + ButylLi \rightarrow R^4Li \\ R^5 + ButylLi \rightarrow R^5Li \end{array}\right\} \xrightarrow{Cl-R^3-Cl} R^4-R^3-R^5$$

$$R^4-R^3-R^5 + 2\ ButylLi \rightarrow LiR^4-R^3-R^5Li$$

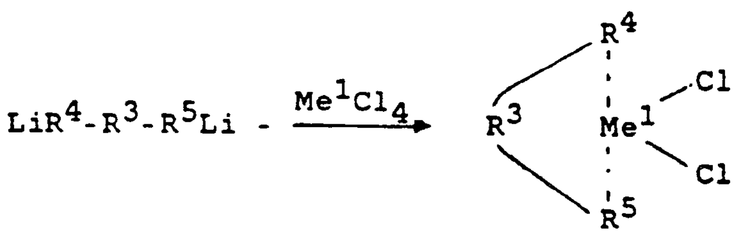


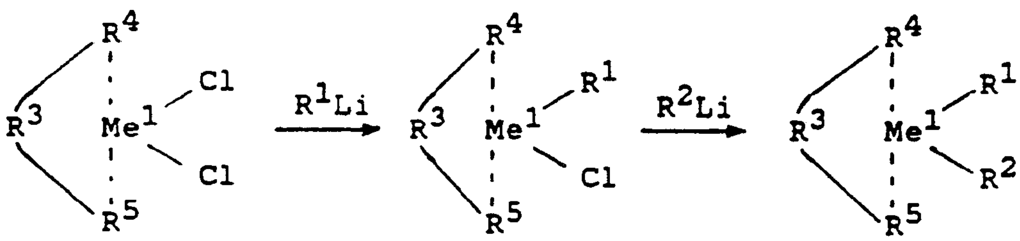


Zur erfindungsgemäßen Polymerisation von 1-Olefinen zu Stereoblockpolymeren wird ein Metallocen der Formel II eingesetzt :

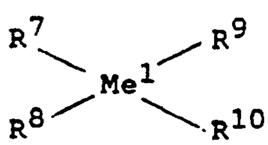

(II).

In dieser Formel hat $Me^1$ die obengenannte Bedeutung.

$R^7$ und $R^8$ sind gleich oder verschieden und bedeuten ein Halogenatom, $C_1$- bis $C_{10}$-Alkyl, $C_6$- bis $C_{10}$-Aryl, $C_2$- bis $C_{10}$-Alkenyl, $C_7$- bis $C_{40}$-Arylalkyl, $C_7$- bis $C_{40}$-Alkylaryl oder $C_8$- bis $C_{40}$-Alkenylaryl.

$R^9$ und $R^{10}$ sind gleich oder verschieden und bedeuten einen substituierten Cyclopentadienylrest, wobei dieser Rest ein oder mehrere Chiralitätszentren enthält und durch Umsetzung von Alkalicyclopentadienid mit einem Sulfonsäureester eines chiralen Alkohols entstanden ist.

In Formel II ist $Me^1$ vorzugsweise Zirkon und $R^7$ und $R^8$ bedeuten vorzugsweise ein Halogenatom oder eine Alkylgruppe, vorzugsweise Methyl, insbesondere ein Chloratom. $R^9$ und $R^{10}$ sind durch Umsetzung eines Alkalicyclopentadienids, vorzugsweise Natriumcyclopentadienids, und einem Sulfonsäureester beispielsweise eines der folgenden chiralen Alkohole entstanden :

Thujylalkohol ; Neothujylalkohol ; cis-, trans-Sabinol ; 2,5-Dimethyl-4-vinyl-2,5-hexadien-1-ol ; Lavandulol ; Isopulegol ; Neoisopulegol ; cis-, trans-Pulegol ; Isomenthol ; Neomenthol ; Neoisomenthol ; Menthol ; cis-, trans-$\Delta^1$(7)-p-Menthenol-(2) ; cis-, trans-$\Delta^1$(7)8-p-Menthadienol-(2) ; Dihydrocarveol ; Neodihydrocarveol ; Isodihydrocarveol ; Neoisodihydrocarveol ; Carvomenthol ; Neoisocarvomenthol ; Isocarvomenthol ; Neocarvomenthol ; Perilla-Alkohol ; Phellandrol ; Butanol-(2) ; Cycloisolongifolol ; Isolongifolol ; 2-Methylbutanol ; Octanol-(2) ; Pentanol-(2) ; Phenylethanol ; Hydroxycitronellal ; Hydroxycitronellol ; cis-, trans-Myrtenol ; 2,6-Dimethylocten-(3)-diol-(2,8) ; 2,6-Dimethylocten-(1)-diol-(3,8) ; Dihydrocitronellol ; Citronellol ; 2,6-Dimethyloctadien-(2,7)-ol-(4) ; 2,6-Dimethyloctadien-(1,7)-ol-(3) ; $\Delta^{1,8}$-p-Menthadienol-(9) ; $\Delta^{1}$-p-Menthenol-(9) ; cis-, trans-Sobrerol ; cis-m-Menthanol-(5), $\Delta^{4/10}$-Carenol-(5) ; $\Delta^{3}$-Carenol-(2) ; Caranol-(3) ; Isocaranol-(3); Neocaranol-(3) ; Neoisocaranol-(3) ; α,ß-Fenchol ; Borneol ; Isoborneol ; cis-, trans-Myrtanol ; Neoverbanol ; Neoisoverbanol ; cis-, trans-Chrysanthenol ; cis-, trans-Verbenol ; Isoverbanol ; cis-, trans-Pinocarveol ; Pinocampheol ; Neopinocampheol ; Isopinocampheol ; Neoisopinocampheol ; Methylnopinol.

Von diesen chiralen Alkoholen werden die cyclischen bevorzugt eingesetzt. Besonders bevorzugt ist Neomenthol. Somit ist die besonders bevorzugt verwendete Metallocenverbindung Bis-neomenthylcyclopentadienylzirkoniumdichlorid.

Die Herstellung dieser Verbindungen kann beispielsweise auf folgende Weise erfolgen.

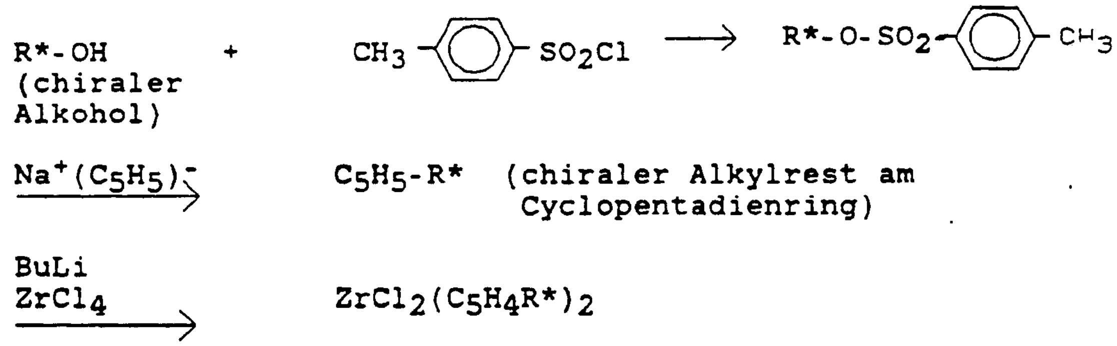


Ferner sind für die Herstellung von Stereoblockpolymeren Metallocene der Formel III

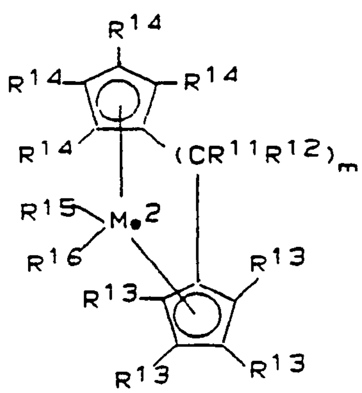

(III)

geeignet. In dieser Formel ist $Me^2$ ein Metall der Gruppe IVb, Vb oder VIb des Periodensystes, beispielsweise Titan, Zirkon, Hafnium, Vanadium, Chrom, Molybdän, Wolfram, vorzugsweise Titan und Zirkon.

$R^{11}$ und $R^{12}$ sind gleich oder verschieden und bedeuten $C_1$- bis $C_{10}$-Alkyl, $C_6$- bis $C_{10}$-Aryl, $C_2$- bis $C_{10}$-Alkenyl, $C_7$- bis $C_{40}$-Aralkyl, vorzugsweise Phenyl, Ethyl, Methyl, insbesondere Methyl.

$R^{13}$ und $R^{14}$ sind gleich oder verschieden und bedeuten ein Wasserstoffatom oder eine Methylgruppe, vorzugsweise ein Wasserstoffatom.

$R^{15}$ und $R^{16}$ sind ebenfalls gleich oder verschieden und bedeuten ein Halogenatom wie Chlor, Brom oder Jod, $C_1$- bis $C_{10}$-Alkyl, $C_6$- bis $C_{10}$-Aryl, $C_2$- bis $C_{10}$-Alkenyl, $C_7$- bis $C_{40}$-Arylalkyl oder $C_8$- bis $C_{40}$-Arylalkenyl, vorzugsweise Methyl oder Chlor, insbesondere Chlor.

m ist eine ganze Zahl von 1 bis 4, vorzugsweise 2.

Die besonders bevorzugt eingesetzte Metallocenverbindung ist Tetramethylethylen-bis(cyclopentadienyl)-titandichlorid. Dieser Typ Verbindung kann beispielsweise hergestellt werden durch reduktive Kupplung von 6,6-Dimethylfulven mit Natriumamalgam, Natriumanthracenid oder Magnesiumetall/$CCl_4$ als Reduktionsmittel mit nachfolgender Umsetzung der anionischen Tetramethyldicyclopentadienylethan-Verbindung mit $TiCl_4$ oder $ZrCl_4$.

Vor dem Einsatz in der Polymerisationsreaktion wird das Metallocen mit einem Aluminoxan voraktiviert.

Dieses Aluminoxan ist eine Verbindung der Formel IV

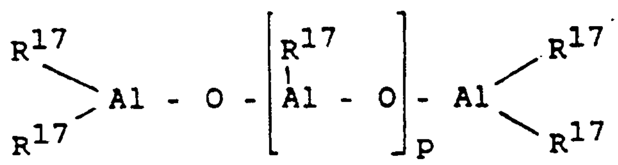

(IV)

für den linearen Typ und/oder der Formel V

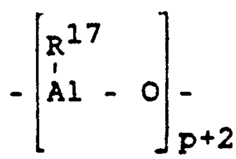

(V)

für den cyclischen Typ. In diesen Formeln bedeuten $R^{17}$ eine $C_1$-$C_6$-Alkylgruppe, vorzugsweise Methyl, Ethyl oder Isobutyl, insbesondere Methyl, und p eine ganze Zahl von 2 bis 50, bevorzugt 15 bis 30.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa −20°C mit soviel Aluminiumtrialkyl versetzt, daß fur je 4 Al-Atome etwa 1 mol $CuSo_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und das Toluol unter Vakuum abdestilliert. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von −20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 — vorzugsweise 5 : 1 — und die Reaktionszeit, die durch Abspaltung des Alkans kontrolliert werden kann, 1 bis 200 Stunden — vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 16 bzw. 18 mol $H_2O$/mol $Al_2(SO_4)_3$.

Die Voraktivierung wird in Lösung vorgenommen. Dabei wird das Metallocen in Form eines Feststoffs in einer Lösung des Aluminoxans in einem inerten Kohlenwasserstoff aufgelöst. Als inerter Kohlenwasserstoff eignet sich ein aliphatischer oder aromatischer Kohlenwasserstoff.

Bevorzugt wird Toluol verwendet.

Die Konzentration des Aluminoxans in der Lösung liegt im Bereich von ca 1 Gew.-% bis zur Sättigungsgrenze, vorzugsweise von 5 bis 30 Gew.-%, jeweils bezogen auf die Gesämtlösung. Das Metallocen kann in der gleichen Konzentration eingesetzt werden, vorzugsweise wird es jedoch in einer Menge von $10^{-4}$ – 1 mol pro mol Aluminoxan eingesetzt. Die Voraktivierungszeit beträgt 5 Minuten bis 100 Stunden, vorzugsweise 5 bis 60, insbesondere 10 bis 20 Minuten.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Voraktivierung wird bei einer Temperatur von −78 bis 100°C, vorzugsweise 0 bis 70°C durchgeführt.

Die Voraktivierung kann sowohl unter Ausschluß von Licht, als auch bei Lichteinstrahlung erfolgen, da die in der Regel lichtempfindlichen Metallocene durch das Aluminoxan stabilisiert werden. Bevorzugt its trotzdem, besonders bei längeren Voraktivierungszeiten und bei besonders empfindlichen heteroatomsubstituierten Metallocenen direkte Lichteinstrahlung auszuschließen.

Die zweite Komponente des erfindungsgemäß zu verwendenden Katalysators ist ein Aluminoxan der Formeln IV und/oder V. Vorzugsweise wird das gleiche Aluminoxan zur Voraktivierung und zur Polymerisation verwendet.

Der erfindungsgemäß zu verwendende Katalysator wird zur Polymerisation von 1-Olefinen der Formel R-

$CH=CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen. Ferner wird der Katalysator auch zur Copolymerisation dieser Olefine untereinander und mit Ethylen eingesetzt, wobei mehr als 50 Gew.-% Ethylen einpolymerisiert werden können.

Die Polymerisation wird in bekannter Weise in Lösung, in Suspension oder in der Gasphase, kontinuierlich oder diskontinuierlich, ein- oder mehrstufig bei einer Temperatur von – 60 bis 200, vorzugsweise – 20 bis 120, insbesondere – 20 bis 80°C, durchgeführt. Der Druck beträgt 0,5 bis 60 bar. Bevorzugt ist die Polymerisation in dem technisch besonders interessanten Druckbereich von 5 bis 60 bar.

Dabei wird die ein Metallocen enthaltende Übergangsmetallkomponente in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Es ist vorteilhaft, das Aluminoxan vor Zugabe der ein Metallocen enthaltenden Übergangsmetallkomponente in das Polymerisationssystem erst einige Minuten zusammen mit der Polymerisationsflüssigphase zu rühren. Die Rührzeit beträgt vorzugsweise 10 bis 30 Minuten. Es kann jedoch ohne größere Einbußen auch kürzere Zeit gerührt werden, eine längere Rührzeit hat auf das Ergebnis der Polymerisation keine nennenswerte Wirkung.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff ; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt. Die Molmasse des Polymerisats kann in bekannter Weise geregelt werden ; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Mittels des erfindungsgemäßen Verfahrens können Polymerpulver hergestellt werden, die aus kompakten kugelförmigen Teilchen mit einer sehr engen Korngrößenverteilung und einer hohen Schüttdichte bestehen Das Polymerpulver zeichnet sich durch eine sehr gute Rieselfähigkeit aus.

Durch die erfindungsgemäße Voraktivierung des Metallocens durch das stark lewisacide Aluminoxan wird das Metallocen nicht reduziert und dadurch irrevesibel desaktiviert, sondern im Gegenteil stabilisiert. Auch die bekannte Lichtempfindlichkeit der Metallocene wird beseitigt.

Gleichzeitig wird durch das Lösen des Metallocens in der Aluminoxanlösung und die bevorzugte Polymerisation im flüssigen Monomeren der Bedarf an (nicht polymerisierenden) Löse- bzw. Suspensionsmittel verringert.

Die nachfolgenden Beispiele sollen die Erfindung erläutern Es bedeuten

| | |
|---|---|
| VZ = | Viskositätszahl in $cm^3/g$, |
| $M_w$ = | Molmassengewichtsmittel, |
| $M_w/M_n$ = | Molmassenverteilung, ermittelt durch Gelpermeationschromatographie, |
| SD = | Schüttdichte in $g/dm^3$ und |
| II = | Isotaktischer Index, bestimmt durch $^{13}C$-NMR-Spektroskopie |
| $n_{iso}$ = | Länge der isotaktischen Sequenzen bestimmt durch $^{13}C$-NMR Spektroskopie. |

**Beispiel 1**

Ein trockener 16-$dm^3$-Kessel wurde mit Stickstoff gespült und mit 10 $dm^3$ flüssigem Propylen befüllt. Dann wurden 50 $cm^3$ toluolische Methylaluminoxanlösung (entsprechend 40 mmol Al, mittlerer Oligomerisierungsgrad des Methylaluminoxans ist n = 20) zugegeben und der besatz bei 30°C 15 Minuten gerührt. Parallel dazu wurden 9 mg (0,02 mmol) Bisindenyldimethylsilyl-zirkondichlorid in 25 $cm^3$ toluolischer Methylaluminoxanlösung (20 mmol Al) gelöst und durch 15-minütiges Stehenlassen voraktiviert. Die orangerote Lösung wurde dann in den Kessel gegeben. Das Polymerisationssystem wurde auf eine Temperatur von 70°C gebracht und dann durch entsprechende Kühlung 1 h bei dieser Temperatur gehalten.

Es wurden 2,0 kg Polypropylen erhalten. Die Aktivität des Metallocens betrug somit 100 kgPP/mmol Zr·h. VZ = 45 $cm^3/g$, $M_w$ = 35000, $M_w/M_n$ = 2,1, SD = 520 $g/dm^3$, II = 96,5%.

Cl- und Zr-Gehalte im Polymeren lagen unter 1 ppm.

Korngrößenverteilung im Polymeren

| Siebboden [µm] | Anteil in % | Summe in % |
|---|---|---|
| <100 | 1,9 | 1,9 |
| 100-200 | 11,8 | 13,7 |
| 200-300 | 29,7 | 43,4 |
| 300-400 | 17,0 | 60,4 |
| 400-500 | 17,2 | 77,6 |
| 500-630 | 18,3 | 95,9 |
| 630-800 | 3,3 | 99,2 |
| >800 | 0,8 | 100,0 |

$$d_{50} = 340\ \mu m,\quad s = \ln \frac{d_{50}}{d_{16}} = 0{,}48$$

**Beispiel 2**

Es wurde analog zu Beispiel 1 verfahren, jedoch statt 9 mg Bisindenyldimethylsilylzirkondichlorid wurden nur 4,5 mg (0,01 mmol) eingesetzt und die Polymerisationszeit betrug 2 h.

Es wurden 1,95 kg Polypropylen erhalten. Die Aktivität des Metallocens betrug somit 97,5 kg PP/mmol Zr·h.

VZ = 48 $cm^3/g$, $M_w$ = 39000, $M_w/M_n$ = 2,2, SD = 500 $g/dm^3$, II = 97%. Cl- und Zr-Gehalte im Polymeren lagen unter 0,5 ppm. In der zweiten Polymerisationsstunde war folglich kein Abfall der Polymerisationsaktivität eingetreten.

Korngrößenverteilung im Polymeren

| Siebboden [µm] | Anteil in % | Summe in % |
|---|---|---|
| <100 | 2,0 | 2,0 |
| 100-200 | 3,1 | 5,1 |
| 200-300 | 5,4 | 10,5 |
| 300-400 | 6,1 | 16,6 |
| 400-500 | 7,9 | 24,5 |
| 500-630 | 14,0 | 38,5 |
| 630-800 | 13,9 | 52,4 |
| 800-1000 | 17,6 | 70,0 |
| 1000-1250 | 21,5 | 91,5 |
| 1250-2000 | 8,3 | 99,8 |
| >2000 | 0,2 | 100,0 |

$$d_{50} = 760\ \mu m,\quad s = \ln \frac{d_{50}}{d_{16}} = 0{,}67$$

**Beispiel 3**

Es wurde analog zu Beispiel 1 verfahren, jedoch wurden 20 mg (0,045 mmol) Bisindenyldimethylsilylzirkondichlorid eingesetzt und die Polymerisationstemperatur betrug 50°C.

Es wurden 1,0 kg Polypropylen erhalten. Die Aktivität des Metallocens betrug somit 22,2 kg PP/mmol Zr·h.

VZ = 60 $cm^3/g$, $M_w$ = 55000, $M_w/M_n$ = 2,0, SD = 300 $g/dm^3$, II = 97,3%, 4,1 ppm Cl und 4 ppm Zr im Polymeren.

**Beispiel 4**

Verfahren wurde analog zu Beispiel 1, jedoch wurden 20 mg (0,045 mmol) Bisindenyldimethylsilylzirkondichlorid eingesetzt, die Polymerisationstemperatur betrug 50°C und die Polymerisationszeit 2 h.

Es wurden 1,91 kg Polypropylen erhalten. Die Aktivität des Metallocens betrug 21,2 kg PP/mmol Zr·h.

VZ = 62 $cm^3/g$, $M_w$ = 57000, $M_w/M_n$ = 2,2, SD = 310 $g/dm^3$, II = 97,0%, 2,5 ppm Cl und 2 ppm Zr im Polymeren.

In der zweiten Polymerisationsstunde ist folglich kein Abfall der Polymerisationsaktivität eingetreten.

**Beispiel 5**

Ein trockener 16-$dm^3$-Kessel wurde mit Stickstoff gespült und mit 10 $dm^3$ flüssigem Propylen befüllt. Dann wurden 100 $cm^3$ toluolische Methylaluminoxanlösung (entsprechend 80 mmol Al, mittlerer Oligomerisierungsgrad n = 20) zugegeben und bei 30°C 15 Minuten gerührt. Parallel dazu wurden 7,5 mg (0,017 mmol) Bisindenyldimethylsilylzirkondichlorid in 50 $cm^3$ toluolischer Methylaluminoxanlösung (40 mmol Al-Gehalt) gelöst und durch 15-minütiges Stehenlassen voraktiviert. Die orangerote Lösung wurde dann in den Kessel gegeben. Das Polymerisationssystem wurde auf eine Temperatur von 70°C gebracht und dann durch entsprechende Kühlung 1 h bei dieser Temperatur gehalten. Erhalten wurden 2,94 kg Polypropylen. Die Aktivität des Metallocens betrug somit 172, 9 kg PP/mmol Zr · h.

VZ = 47 $cm^3/g$, $M_w$ = 40000, $M_w/M_n$ = 1,9, SD = 530 $g/dm^3$, II = 97,1%, Cl- und Zr-Gehalte im Polymeren lagen unter 0,5 ppm.

Korngrößenverteilung im Polymeren:

| Siebboden [µm] | Anteil in % | Summe in % |
|---|---|---|
| <100 | 2,5 | 2,5 |
| 100-200 | 4,6 | 7,1 |
| 200-300 | 7,4 | 14,5 |
| 300-400 | 35,9 | 50,4 |
| 400-500 | 40,0 | 90,4 |
| 500-630 | 7,8 | 98,2 |

| Siebboden [µm] | Anteil in % | Summe in % |
|---|---|---|
| 630-800 | 1,1 | 99,3 |
| 800-1000 | 0,6 | 99,9 |
| >1000 | 0,1 | 100,0 |

$$d_{50} = 390\ \mu m,\ s = \ln \frac{d_{50}}{d_{16}} = 0,23.$$

**Vergleichsbeispiel A**

Ein trockener 16-$dm^3$-Kessel wurde mit Stickstoff gespült und mit 10 $dm^3$ flüssigem Propylen befüllt. Dann wurden 150 $cm^3$ toluolische Methylaluminoxanlösung (entsprechend 120 mmol Al, mittlerer Oligomerisierungsgrad n = 20) zugegeben und 15 Minuten gerührt. Dazu wurden 7,5 mg (0,017 mmol) Bisindenyldimethylsilylzirkondichlorid, gelöst in 50 $cm^3$ über Na/K-Legierung getrocknetem, destillierten und mit Argon gesättigten Toluol, zugegeben. Das Polymerisationssystem wurde auf eine Temperatur von 70°C gebracht und durch weitere Wärmezufuhr 10 h bei dieser Temperatur gehalten.

Es wurden 0,21 kg Polypropylen erhalten. Die Aktivität des Metallocens betrug somit 1,24 kgPP/mmol Zr·h.

VZ = 40 $cm^3/g$, $M_w$ = 26400, $M_w/M_n$ = 1,9, SD = 80 $g/dm^3$, II = 90,1%.

100% des Polymeren wies eine Korngröße von < 50 µm auf.

**Vergleichsbeispiel B**

Ein trockener 16-$dm^3$-Kessel wurde mit Stickstoff gespült und mit 10 $dm^3$ flüssigem Propylen befüllt. Dann wurden 7,5 mg (0,017 mmol) Bisindenyldimethylsilylzirkondichlorid, das in 50 $cm^3$ über Na/K-Legierung getrocknetem, destillierten und mit Argon gesättigten Toluol gelöst und mit 150 $cm^3$ toluolischer Methylaluminoxanlösung (entsprechend 120 mmol Al, mittlerer Oligomerisierungsgrad n = 20) versetzt wurde, gegeben. Das Polymerisationssystem wurde auf eine Temperatur von 70°C gebracht und durch weitere Wärmezufuhr 10 h bei dieser Temperatur gehalten.

1,06 kg Polypropylen wurden erhalten. Die Aktivität des Metallocens betrug 6,2 kgPP/mmol Zr · h.

VZ = 43 $cm^3/g$, $M_w$ = 32700, $M_w/M_n$ = 2,2, SD = 100 $g/dm^3$, II = 95,6%.

100% des Polymeren wies eines Korngröße von < 50 µm auf.

**Vergleichsbeispiel C**

Ein trockener 16-$dm^3$-Kessel wurde mit Stickstoff gespült und mit 10 $dm^3$ flüssigem Propylen befüllt. Dann wurden 100 $cm^3$ toluolische Methylaluminoxanlösung (entsprechend 80 mmol Al, mittlerer Oligomerisierungsgrad n = 20) zugegeben und bei 30°C 15 Minuten gerührt. Parallel dazu werden 7,5 mg (0,017 mmol) Bisindenyldimethylsilylzirkondichlorid in 50 $cm^3$ Toluol gelöst (0,34 $mmol/dm^3$). Das Toluol wurde zuvor über Na/K-Legierung getrocknet, destilliert und mit Argon gesättigt. Zu dieser Lösung gab man 50 $cm^3$ toluolische Methylaluminoxanlösung (40 mmol Al) und ließ 15 Minuten zur Voraktivierung stehen. Die Lösung wurde dann in den Kessel gegeben. Das Polymerisationssystem wurde auf eine Temperatur von 70°C gebracht und dann 1 h bei dieser Temperatur gehalten.

Erhalten wurden 0,61 kg Polypropylen. Die Aktivität des Metallocens betrug 35,9 kgPP/mmol Zr · h.

VZ = 43 $cm^3/g$, $M_w$ = 32800, $M_w/M_n$ = 2,0, SD = 305 $g/dm^3$, II = 92,1%.

Korngrößenverteilung:

| Siebboden [µm] | Anteil in % | Summe in % |
|---|---|---|
| <100 | 33,6 | 33,6 |
| 100-200 | 65,4 | 99,0 |
| >200 | 1,0 | 100,0 |

$d_{50}$ = 115 µm.

**Beispiel 6**

Verfahren wurde analog zu Beispiel 5, jedoch wurden 20 mg (0,045 mmol) Bisindenyldimethylsilylzirkondichlorid eingesetzt. Die Polymerisationstemperatur betrug 50°C.

Es wurden 1,82 kg Polypropylen erhalten. Die Aktivität des Metallocens betrug 40,4 kg PP/mmol Zr · h.

VZ = 58 $cm^3/g$, $M_w$ = 53000, $M_w/M_n$ = 2,0, SD = 320 $g/dm^3$, II = 98%, 2,1 ppm Cl- und 3 ppm Zr im Polymeren.

**Beispiel 7**

Es wurde analog zu Beispiel 5 verfahren, jedoch wurden 20 mg (0,045 mmol) Bisindenyldimethylsilylzirkondichlorid eingesetzt und die Polymerisationstemperatur betrug 35°C.

Es wurden 0,95 kg Polypropylen erhalten. Die Aktivität des Metallocens betrug 21,1 kg PP/mmol Zr · h.

VZ = 74 $cm^3$/g, $M_w$ = 72000, $M_w/M_n$ = 2,2, SD = 160 g/$dm^3$, II = 98,3%, 4,4 ppm Cl und 5 ppm Zr im Polymeren.

**Beispiel 8**

Es wurde analog zu Beispiel 5 verfahren, jedoch wurden 40 mg (0,09 mmol) Bisindenyldimethylsilylzirkondichlorid eingesetzt und die Polymerisationstemperatur betrug 20°C.

1,05 kg Polypropylen wurden erhalten. Die Aktivität des Metallocens betrug 11,7 kg PP/mmol Zr · h.

VZ = 90 $cm^3$/g, $M_w$ = 92000, $M_w/M_n$ = 2,0, SD = 150 g/$dm^3$, II = 98,5%, 5,8 ppm Cl und 7 ppm Zr im Polymeren.

**Vergleichsbeispiel D**

Es wurde analog zu Vergleichsbeispiel C verfahren, jedoch wurden 40 mg (0,09 mmol) Bisindenyldimethylsilylzirkondichlorid eingesetzt und die Polymerisationstemperatur betrug 20°C.

Es wurden 0,16 kg Polypropylen erhalten. Die Aktivität des Metallocens betrug 1,78 kg PP/mmol Zr · h.

VZ = 91 $cm^3$/g, $M_w$ = 91500, $M_w/M_n$ = 2,0, SD = 85 g/$dm^3$, II = 98%. 100% des Polymeren wiesen eine Korngröße von < 50 µm auf.

**Beispiel 9**

Es wurde analog zu Beispiel 5 verfahren, jedoch wurden 100 mg (0,223 mmol) Bisindenyldimethylsilylzirkondichlorid eingesetzt. Die Polymerisationstemperatur betrug 0°C.

Es wurden 1,47 kg Polypropylen erhalten. Die Aktivität des Metallocens betrug 6,6 kg PP/mmol Zr · h.

VZ = 114 $cm^3$/g, $M_w$ = 115000, $M_w/M_n$ = 1,9, SD = 140 g /$dm^3$, II = 99,3%, 12 ppm Cl und 11 ppm Zr im Polymeren.

**Beispiel 10**

Verfahren wurde analog zu Beispiel 5, jedoch wurden 25 mg (0,056 mmol) Bisindenyldimethylsilylzirkondichlorid eingesetzt, die Polymerisationstemperatur betrug 0°C und die Polymerisationszeit 5 h.

Erhalten wurden 1,62 kg Polypropylen. Die Aktivität des Metallocens betrug 5,8 kg PP/mmol Zr · h.

VZ = 110 $cm^3$/g, $M_w$ = 112000, $M_w/M_n$ = 2,0, SD = 145 g/$dm^3$, II = 99,5%, 2,6 ppm Cl und 4 ppm Zr im Polymeren.

**Beispiel 11**

7,5 mg (0,017 mmol) Bisindenyldimethylsilylzirkondichlorid wurden in 50 $cm^3$ toluolischer Methylaluminoxanlösung (40 mmol Al, mittlerer Oligomerisierungsgrad n = 20) gelöst und unter Lichtausschluß 100 h stehengelassen (Katalysatorkomponente (a)). Ein trockener 16-$dm^3$-Kessel wurde mit Stickstoff gespült und mit 10 $dm^3$ flüssigem Propylen befüllt. Dann wurden 100 ml toluolische Methylaluminoxanlösung (entsprechend 80 mmol Al) zugegeben und bei 30°C 15 Minuten gerührt. Die orangerote Lösung der Katalysatorkomponente (a) wurde dann in den Kessel gegeben. Das Polymerisationssystem wurde auf eine Temperatur von 70°C gebracht und dann durch entsprechende Kühlung 1 h bei dieser Temperatur gehalten. 2,79 kg Polypropylen wurden erhalten. Die Aktivität des Metallocens betrug 164,1 kg PP/mmol Zr · h.

VZ = 50 $cm^3$/g, $M_w$ = 42000, $M_w/M_n$ = 2,0, SD = 520 g/$dm^3$, II = 97,5%, Cl- und Zr-Gehalte im Polymeren lagen unter 0,5 ppm.

**Vergleichsbeispiel E**

7,5 mg (0,017 mmol) Bisindenyldimethylsilylzirkondichlorid wurden in 50 $cm^3$ über Na/K-Legierung getrocknetem, destillierten und mit Argon gesättigtem Toluol gelöst und 100 h bei Tageslicht stehengelassen. Dann wurden 50 $cm^3$ toluolische Methylaluminoxanlösung (entsprechend 80 mmol Al, mittlerer Oligomerisierungsgrad n = 20) zugegeben. Die Mischung ließ man 15 Min. zur Voraktivierung stehen (Katalysatorkomponente (a)). Parallel dazu wurde ein trockener 16-$dm^3$-Kessel mit Stickstoff gespült und mit 10 $dm^3$ flüssigem Propylen befüllt. Dann wurden 100 $cm^3$ toluolische Methylaluminoxanlösung (entsprechend 80 mmol Al, mittlerer Oligomerisierungsgrad n = 20) zugegeben und der Ansatz bei 30°C 15 Minuten gerührt. Daraufhin wurde die Lösung der Katalysatorkomponente (a) in den Kessel gegeben. Der Kesselinhalt wurde auf 70°C gebracht und 1 h bei dieser Temperatur gehalten.

Es wurden 0,13 kg Polypropylen erhalten. Die Aktivität des Metallocens betrug 7,6 kg PP/mmol Zr · h.

VZ = 45 $cm^3/g$, $M_w$ = 34600, $M_w/M_n$ = 2,0, SD = 120 $g/dm^3$, II = 95,1%.

100% des Polymeren wiesen eine Korngröße von < 50 μm auf.

**Beispiel 12**

Es wurde analog zu Beispiel 11 verfahren, die toluolische Methylaluminoxan/Metallocenlösung wurde jedoch 100 h dem Tageslicht ausgesetzt.

Erhalten wurden 2,85 kg Polypropylen. Die Aktivität des Metallocens betrug 167,6 kg PP/mmol Zr · h.

VZ = 48 $cm^3/g$, $M_w$ = 39000, $M_w/M_n$ = 2,1, SD = 525 $g/dm^3$, II = 97,4%.

**Vergleichsbeispiel F**

7,5 mg (0,017 mmol) Bisindenyldimethylsilylzirkondichlorid wurden in 50 $cm^3$ über Na/K-Legierung getrocknetem, destillierten und mit Argon gesättigten Toluol gelöst und 1 h bei Tageslicht stehengelassen. Dann wurden 50 $cm^3$ toluolische Methylaluminoxanlösung (entsprechend 80 mmol Al, mittlerer Oligomerisierungsgrad n = 20) zugegeben. Die Mischung ließ man 15 Min. zur Voraktivierung stehen. Parallel dazu wurde ein trockener 16-$dm^3$-Kessel mit Stickstoff gespült und mit 10 $dm^3$ flüssigem Propylen befüllt. Dann wurden 100 $cm^3$ toluolische Methylaluminoxanlösung (entsprechend 80 mmol Al, mittlerer Oligomerisierungsgrad n = 20) zugegeben und der Ansatz bei 30°C 15 Minuten gerührt. Die Lösung der Katalysatorkomponente (a) wurde sodann in den Kessel gegeben. Das Polymerisationssystem wurde auf eine Temperatur von 70°C gebracht und dann 1 h bei dieser Temperatur gehalten.

Es wurden 0,41 kg Polypropylen erhalten. Die Aktivität des Metallocens betrug 24,1 kg PP/mmol Zr·h.

VZ = 41 $cm^3/g$, $M_w$ = 31000, $M_w/M_n$ = 2,0, SD = 210 $g/dm^3$, II = 94,5%.

100% des Polymeren wiesen eine Korngröße von < 100 μm auf.

**Vergleichsbeispiel G**

Es wurde wie in Vergleichsbeispiel F verfahren, die toluolische Lösung des Metallocens wurde jedoch vor Zugabe des Methylaluminoxans 100 h bei Tageslicht stehengelassen.

Aus der Polymerisation wurde dein Polypropylen erhalten, das Katalysatorsystem war somit völlig inaktiv!

**Beispiel 13**

Ein trockener 16-$dm^3$-Kessel wurde mit Stickstoff gespült und mit 10 $dm^3$ flüssigem Propylen befüllt. Dann wurden 100 $cm^3$ toluolische Methylaluminoxanlösung (entsprechend 80 mmol Al, mittlerer Oligomerisierungsgrad n = 20) zugegeben und das Gemisch bei 30°C 15 Minuten gerührt. Parallel dazu wurden 6 mg (0,014 mmol) Ethylenbisindenylzirkondichlorid in 50 $cm^3$ toluolischer Methylaluminoxanlösung (40 mmol Al) gelöst und durch 15-minütiges Stehenlassen voraktiviert. Die gelbe Lösung wurde sodann in den Kessel gegeben. Das Polymerisationssystem wurde auf eine Temperatur von 70°C gebracht und durch entsprechende Kühlung 1 h bei dieser Temperatur gehalten.

Erhalten wurden 3,05 kg Polypropylen. Die Aktivität des Metallocens betrug 217,9 kg PP/mmol Zr·h.

VZ = 32 $cm^3/g$, $M_w$ = 20500, $M_w/M_n$ = 2,0, SD = 540 $g/dm^3$, II = 96,4%.

Korngrößenverteilung im Polymer:

| Siebboden [µm] | Anteil in % | Summe in % |
|---|---|---|
| <100 | 2,5 | 2,5 |
| 100-200 | 3,5 | 6,0 |
| 200-300 | 7,1 | 13,1 |
| 300-400 | 16,1 | 29,2 |
| 400-500 | 27,3 | 56,5 |
| 500-630 | 34,0 | 90,5 |
| 630-800 | 8,8 | 99,3 |
| >800 | 0,7 | 100,0 |

$$d_{50} = 475\ \mu m,\quad s = \ln \frac{d_{50}}{d_{16}} = 0,38$$

**Beispiel 14**

Es wurde analog zu Beispiel 13 verfahren, jedoch wurden 10 mg (0,024 mmol) Ethylenbisindenylzirkondichlorid eingesetzt. Die Polymerisationstemperatur betrug 50°C.

Erhalten wurden 2,83 kg Polypropylen. Die Aktivität des Metallocens betrug 117,9 kg PP/mmol Zr · h.

VZ = 45 cm³/g, $M_w$ = 37400, $M_w/M_n$ = 1,9, SD = 410 g/dm³, II = 97,0%, Cl und Zr-Gehalte im Polymeren lagen unter 1 ppm.

Korngrößenverteilung

| Siebboden [µm] | Anteil in % | Summe in % |
|---|---|---|
| <100 | 3,7 | 3,7 |
| 100-200 | 21,4 | 25,1 |
| 200-300 | 54,3 | 79,4 |
| 300-400 | 18,4 | 97,8 |
| >400 | 2,2 | 100 |

$$d_{50} = 250\ \mu m,\quad s = \ln \frac{d_{50}}{d_{16}} = 0,45.$$

**Beispiel 15**

Es wurde analog zu Beispiel 13 verfahren, jedoch wurden 15 mg (0,036 mmol) Ethylenbisindenylzirkondichlorid eingesetzt und die Polymerisationstemperatur betrug 35°C.

Erhalten wurden 1,81 kg Polypropylen. Die Aktivität des Metallocens betrug 50,3 kg PP/mmol Zr · h.

VZ = 54 cm³/g, $M_w$ = 46500, $M_w/M_n$ = 2,2, SD = 330 g/dm³, II = 97,0%, 1,8 ppm Cl und 2 ppm Zr im Polymeren.

**Beispiel 16**

Es wurde analog zu Beispiel 13 verfahren, jedoch wurden 20 mg (0,045 mmol) Ethylenbisindenylzirkondichlorid eingesetzt. Die Polymerisationstemperatur betrug 20°C.

Es wurden 1,05 kg Polypropylen erhalten. Die Aktivität des Metallocens betrug 23,3 kg PP/mmol Zr · h.

VZ = 66 $cm^3/g$, $M_w$ = 62400, $M_w/M_n$ = 2,0, SD = 260 $g/dm^3$, II = 97,0%, 3,6 ppm Cl und 4 ppm Zr im Polymeren.

**Beispiel 17**

Verfahren wurde analog zu Beispiel 13, jedoch wurden 40 mg (0,096 mmol) Ethylenbisindenylzirkondichlorid eingesetzt. Die Polymerisationstemperatur betrug 0°C.

Erhalten wurden 1,14 kg Polypropylen. Die Aktivität des Metallocens betrug 11,9 kg PP/mmol Zr · h.

VZ = 76 $cm^3/g$, $M_w$ = 74000, $M_w/M_n$ = 2,1, SD = 200 $g/dm^3$, II = 98,1%, 6,3 ppm Cl und 7 ppm Zr im Polymeren.

**Beispiel 18**

Es wurde analog zu Beispiel 13 verfahren, jedoch wurden 15 mg (0,036 mmol) Ethylenbisindenylzirkondichlorid eingesetzt und die Polymerisationstemperatur betrug 0°C und die Polymerisation dauerte 5 h.

Es wurden 1,96 kg Polypropylen erhalten. Die Aktivität des Metallocens betrug 10,9 kg PP/mmol Zr · h.

VZ = 81 $cm^3/g$, $M_w$ = 80200, $M_w/M_n$ = 2,0, SD = 210 $g/dm^3$ II = 97,6%, 1,5 ppm Cl und 2 ppm Zr im Polymeren.

**Beispiel 19**

Ein trockener 16 $dm^3$-Kessel wurde mit Stickstoff gespült und mit 10 $dm^3$ flüssigem Propylen befüllt. Dann wurden 100 $cm^3$ toluolische Methylaluminoxanlösung (entsprechend 80 mmol Al, mittlerer Oligomerisierungsgrad n = 20) zugegeben und das Gemisch bei 30°C 15 Minuten gerührt. Parallel dazu wurden 331 mg (1,0 mmol) Tetramethylethylenbiscyclopentadienyltitandichlorid in 50 $cm^3$ toluolischer Methylaluminoxanlösung (40 mmol) gelöst und durch 15 minütiges Stehenlassen voraktiviert. Die Lösung wurde sodann in den Kessel gegeben. Das Polymerisationssystem wurde durch entsprechende Kühlung 10 h bei 4°C gehlaten. Erhalten wurden 0,17 kg Polypropylen. Die Aktivität des Metallocens betrug 17 kg PP/mol T × h.

$M_w$ = 119500, $M_w/M_n$ = 2,4, II = 71%,

Länge der isotaktischen Sequenzen $n_{iso}$ = 4,6.

**Beispiel 20**

Es wurde analog zu Beispiel 19 verfahren, jedoch wurden 160 mg (0,281 mmol) Bis-(–)-neomenthylcyclopentadienylzirkondichlorid eingesetzt, die Polymerisationstemperatur betrug 6°C und die Polymerisationszeit betrug 8 h. Erhalten wurden 1,50 kg Polypropylen. Die Aktivität des Metallocens betrug 0,67 kg PP/mmol Zr×h.

$M_w$ = 25800, $M_w/M_n$ = 2,7, II = 71%,

Länge der isotaktischen Sequenzen $n_{iso}$ = 3,5.

**Beispiel 21**

Es wurde analog zu Beispiel 19 verfahren, jedoch wurden 215 mg (0,379 mmol) Bis-(+)-neomenthylcyclopentadienylzirkondichlorid eingesetzt, die Polymerisationstemperatur betrug 4°C und die Polymerisationszeit betrug 8 h. Erhalten wruden 1,67 kg Polypropylen. Die Aktivität des Metallocens betrug 0,55 kg PP/mmol Zr×h.

$M_w$ = 47800, $M_w/M_n$ = 2,3, II = 74%,

Länge der isotaktischen Sequenzen $n_{iso}$ = 4,2.

**Beipsiel 22**

Es wurde analog zu Beispiel 19 verfahren, jedoch wurden 200 mg (0,352 mmol) Bisneoisomenthylcyclopentadienylzirkondichlorid eingesetzt, die Polymerisationstemperatur betrug 4°C und die Polymerisationszeit betrug 6 h. Erhalten wurden 1,45 kg Polypropylen. die Aktivität des Metalloces betrug 0,69 kg PP/mmol Zr×h.

$M_w$ = 24400, $M_w/M_n$ = 2,8, II = 70%,

Länge der isotaktischen Sequenzen $n_{iso}$ = 3,8.

**Vergleichsbeispiel H**

Ein trockener 16 $dm^3$-Kessel wurde mit Stickstoff gespült und mit 10 $dm^3$ flüssigem Propylen sowie mit 150 ml toluolischer Methylaluminoxanlösung (entsprechend 120 mmol Al, mittlerer Oligomerisierungsgrad n = 20) befüllt. Dazu wurden 200 mg (0,352 mmol) Bisneoisomenthylcyclopentadienylzirkondichlorid gelöst in 50 $cm^3$ Toluol gegeben. Das Polymerisationssystem wurde 6 h bei 4°C gehalten. Es wurden 0,12 kg Polypropylen erhalten. Die Aktivität des Metallocens betrug 0,06 kg PP/mmol Zr × h.

$M_w$ = 14400, $M_w/M_n$ = 2,7, II = 71%,

Länge der isotaktischen Sequenzen $n_{iso}$ = 3,5.

## Patentansprüche

1. Verfahren zur Herstellung eines 1-Olefinpolymers durch Polymerisation eines 1-Olefins der Formel R-CH=$CH_2$, worin R eine Alkylgruppe mit 1 bis 28 C-Atomen ist, oder Copolymerisation dieser Olefine mit Ethylen bei einer Temperatur von − 60 bis 200°C, bei einem Druck von 0,5 bis 60 bar, in Lösung, in Suspension oder in der Gasphase, in Gegenwart eines Katalysators, welcher aus einer ein Metallocen enthaltenden Übergangsmetallkomponente und einem Aluminoxan der Formel IV oder V als zweiter Komponente besteht, dadurch gekennzeichnet, daß die Polymerisation in Gegenwart eines Katalysators durchgeführt wird, dessen Übergangsmetallkomponente vor der Polymerisation durch Auflösen eines Metallocens in Forms eines Feststoffs in einer Lösung eines Aluminoxans der Formel IV

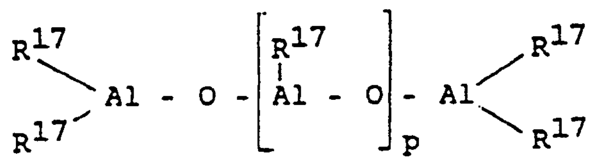

(IV)

für den linearen Typ und/oder der Formel V

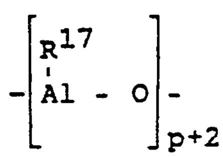

(V)

für den cyclischen Typ ist, wobei in den Formeln IV und V $R^{17}$ eine $C_1$-$C_6$-Alkylgruppe bedeutet und p eine ganze Zahl von 2 bis 50 ist, hergestellt und bei einer Temperatur von − 78 bis 100°C 5 Minuten bis 100 Stunden voraktiviert wurde, und diese Lösung als solche zur Polymerisation verwendet wird.

2. Verfahren nach Anspruch 1, dadurch gekennzeichnet, daß zur Herstellung eines hochisotaktischen 1-Olefinpolymers ein stereorigides chirales Metallocen verwendet wird.

3. Verfahren nach Anspruch 1, dadurch gekennzeichnet, daß für die Herstellung eines Stereoblockpolymers ein Metallocen verwendet wird, welches in der Ligandsphäre mindestens einen chiralen Rest enthält.

## Claims

1. A process for the preparation of a 1-olefin polymer by polymerizing a 1-olefin of the formula R-CH=$CH_2$ in which R is an alkyl group having 1 to 28 carbon atoms or copolymerizing these olefins together with ethylene at a temperature from − 60 to 200°C, under a pressure of 0.5 to 60 bar, in solution, in suspension or in the gas phase and in the presence of a catalyst which is composed of a transition metal component containing a metallocene, and an aluminoxane of the formula IV or V as the second component, which comprises carrying out the polymerization in the presence of a catalyst in which, before the polymerization, the transition metal component has been prepared by dissolving a metallocene in the form of a solid in a solution of an aluminoxane of the formula IV

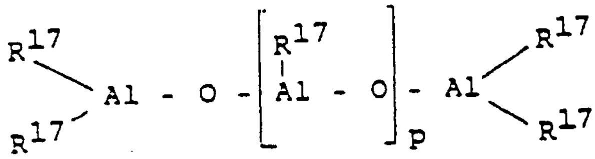

(IV)

for the linear type and/or of the formula V

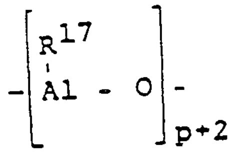

(V)

for the cyclic type, $R^{17}$ in the formulae IV and V being a $C_1$-$C_6$-alkyl group and p being an integer from 2 to 50, and has been preactivated for 5 minutes to 100 hours at a temperature from – 78 to 100°C, and this solution is used as such for the polymerization.

2. The process as claimed in claim 1, wherein a stereorigid, chiral metallocene is used for the preparation of a highly isotactic 1-olefin polymer.

3. The process as claimed in claim 1, wherein a metallocene containing at least one chiral radical in the ligand sphere is used for the preparation of a stereoblock polymer.

**Revendications**

1. Procédé pour préparer un polymère d'alpha-oléfines, par polymérisation d'une alpha-oléfine de formule R-CH=$CH_2$, (dans laquelle R représente un groupe alkyle ayant 1 à 28 atomes de C) ou par copolymérisation de ces oléfines avec l'éthylène à une température allant de – 60 jusqu'à 200 °C, sous une pression de 0,5 à 60 bars, en solution, en suspension ou en phase gazeuse, en présence d'un catalyseur qui consiste en un métallocène contenant un composant de métal de transition et en un aluminoxane de formule IV ou V comme second composant, procédé caractérisé en ce qu'on conduit la polymérisation en présence d'un catalyseur dont le composant à base de métal de transition a été préparé avant la polymérisation par dissolution d'un métallocène, sous forme d'un solide, dans une solution d'un aluminoxane de formule IV

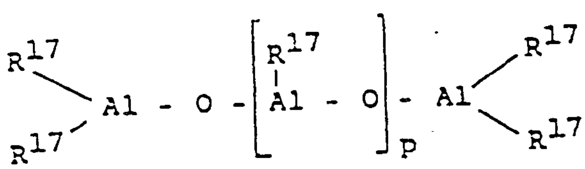

(IV)

pour le type linéaire et/ou de formule V

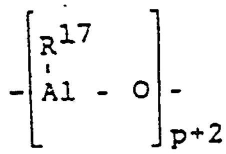

(V)

pour le type cyclique et, dans les formules IV et V, $R^{17}$ représente un groupe alkyle en $C_1$ à $C_6$ et p est un nombre entier valant 2 à 50 ; et qui a été soumis à activation préliminaire à une température comprise entre – 78 et +100°C, durant 5 min à 100 h.

2. Procédé selon la revendication 1, caractérisé en ce que, pour préparer un polymère d'alpha-oléfines fortement isotactique, on utilise un métallocène chiral stéréorigide.

3. Procédé selon la revendication 1, caractérisé en ce que, pour préparer un polymère stéréoséquencé, on utilise un métallocène qui contient dans la sphère du ligand au moins un reste chiral.